# EUROPEAN PATENT SPECIFICATION

(11) **EP 2 651 154 B1**
(45) Date of publication and mention of the grant of the patent: **28.11.2018**
(21) Application number: 12163729.2
(22) Date of filing: 11.04.2012
(51) Int. Cl.: H04W 4/70, H04W 4/90, H04W 76/50

(54) **Communication module, system and method for wireless communication**
Kommunikationsmodul, System und Verfahren zur drahtlosen Kommunikation
Module de communication, système et procédé de communication sans fil

(43) Date of publication of application: 16.10.2013
(73) Proprietor: Gemalto M2M GmbH, 81541 Munich (DE)
(72) Inventor: Lampart, Thomas, 13585 Berlin (DE)
(74) Representative: Grevin, Emmanuel

(56) References cited:
- US-A1- 2010 202 368
- US-A1- 2010 227 584
- 3GPP: "3rd Generation Partnership Project; Technical Specification Group Services and System Aspects; Service aspects; Service principles (Release 12)", 3GPP DRAFT; Z_22101-C00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 14 March 2012 (2012-03-14), XP050623370, [retrieved on 2012-03-14]
- "3rd Generation Partnership Project; Technical Specification Group Services and System Aspects; eCall Data Transfer; In-band modem solution; General description (Release 11)", 3GPP STANDARD; 3GPP TS 26.267, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V11.0.0, 10 March 2012 (2012-03-10), pages 1-36, XP050580073, [retrieved on 2012-03-10]

## Description

The invention relates to a communication module adapted for wireless communication via a communication network and internal connection to an appliance, in particular an application equipment for the appliance, wherein upon detection of an emergency situation parameter of the appliance, the communication module is adapted to externally communicate wirelessly an emergency call to the communication network. The invention also relates to a system of an appliance, in particular comprising an application equipment like an emergency call unit, and/or a module, in particular in the appliance like for instance a mobile or immobile appliance, in particular a vehicle or the like mobile appliance. The invention also relates to a method for wireless communication via the communication module to a communication network, wherein the communication module is connected to an appliance, in particular by means of an application equipment.

A method and system, in particular application equipment, as mentioned is known in the prior art within the concept of an automated electronic emergency call concept labeled as "E-Call" concept. A known emergency call unit is based on a sensory or manually release of an emergency call wherein a signaling system like a bus system or the like, for instance in a vehicle, submits a request for executing an emergency call to a communication network in the case of an emergency situation indicating signal is present on the signaling system. A known emergency call unit comprises a wireless communication module (or simply: module) like for instance a so called machine-to-machine (M2M) module wherein by means of request of the emergency call unit the M2M module builds up a communication link to a predetermined emergency address. According to the emergency situation the address mostly needs to be e.g. an emergency call telephone number for voice connection, wherein the communication link is a voice link for submitting a voice message and preferably additionally an emergency related set of data by means of so-called in-band signaling to an emergency center available under the predetermined emergency call telephone number. In particular communicating wirelessly an emergency call to the communication network comprises: building up a voice call communication link, transmitting a set of safety data in the voice call link, and subsequently being adapted for a voice call communication via the voice call communication link. The predetermined emergency call telephone number usually is configured in the module by means of hardware and/or firmware. In the European Region this E-Call concept (the so-called eSafety initiative) is planned to be put into action in the very near future and thus is to achieve for instance in a vehicle an automated emergency call in the case of an emergency situation, for instance during an accident or the like hazardous situation of a vehicle. In this case, the vehicles passengers or other traffic participants can rely on early help and support during the accident or hazardous situation.

Document 3GPP TS 22.101 describes aspects of group services and other services as part of the 3GPP specification for wireless cellular communication standards for LTE. Its content is to define how special additional services can be integrated in the wireless communication standards. This includes the Emergency Call service in particular explains how IMS emergency call can be used in the IM CN (IP Multimedia subsystem of the Core Network) domain. As such the requirements for a user equipment supporting IM CN emergency call are defined, including the need that the UE shall avoid drawing unnecessary attention to the user once it is aware that an IMS MES (Multimedia Emergency Session) is initiated, and in this case limit feedback to a private manner like text on a screen or audio on headphones.

Document 3GPP TS26.267 specifies the ETSI/3GPP approach for providing the emergency call (eCall) service, in particular about the transfer of eCall data via inband modem functionality and gives an overview about the eCall system as such, where the transfer technology is happen to be assigned to. As part of this overview it is suggested that a call progress indication shall be provided to the user.

In the US patent application US 2010/202368 are described methods and apparatus for providing useful data in an emergency call, the so called minimum set of data (MSD), by means of dispersing them over a voice or user data stream. The user experience during an emergency call is not addressed as part of this description.

Whereas the submission of an emergency call to the communication network as such is ruled out in a particular suitable framework, there is still a demand to further support to the passengers of an appliance carrying an emergency call unit or the like application equipment; namely within the process of submitting an emergency call to an emergency center. Up to now the passengers or other recipients in the nearest surrounding of the module and/or application equipment receive only rare indications as relates the submission of the emergency call and the status thereof. Up to now known procedure provide at most an optical and/or acoustical feedback by means of a Man Machine Interface (MMI) which is as such for manual release of an emergency call by the releasing person once; the optical and/or acoustical feedback however is restricted just to confirm that indeed the manual activity is effected; e.g. to confirm that a button has been pressed. However, this is not sufficient to safely confirm that indeed an emergency call has been effected to the communication network, in particular is not safe to confirm that indeed an emergency call has reached an emergency center. Moreover, it turns out that an MMI in a vehicle or the like mostly and necessarily is to be placed in a vehicle where a damage thereof is most likely to be expected during an accident and/or the like hazardous situation. Thus, it is to be doubted, whether an MMI at all is capable to safely effect an emergency call even under the condition of an accident. Also not only a damage to an MMI can occur but also a battery for powering an MMI can be destroyed or damaged such that an emergency call cannot be effected.

Thus, contemporary solutions up to now are as such of problematic concept to guarantee a safe submission of an emergency call to a network and/or provide reliable information about the status of the emergency call. Indeed up to now, known systems will leave a passenger unsure about the status of an emergency call and also about a status of contacting an emergency center. A destroying or damaging situation and other adverse effects can hinder a reliable confirmation about the status. For instance a communication network can be incapable of allowing a communication link to an emergency center or the passengers as such can be in a stressed mood such that --even in case of slight indication on an MMI unit-- the level of concentration of a passenger will be insufficient to indeed understand the process and status of emergency contacts.

Thus it is desirable to provide a further support to the persons in the surrounding of an emergency call unit or the like application equipment with regard to a status of an emergency call; in particular a passenger shall be informed reliably. A concept of emergency call shall be resistant to adverse effects such that reliable information can be provided to both, an emergency service center and the persons releasing an emergency call. In particular it is desirable to have an improved way of confirmation of an emergency call in an emergency situation of an appliance carrying an application equipment with a communication module.

This is where the invention comes in, the object of which is to provide a device and method for wireless communication via a communication network by means of a communication module connected to an application equipment for an appliance, wherein in an emergency situation of the appliance the module is adapted to externally communicate wireless an emergency call to the communication network and wherein information about the status of an emergency call are reliably available and the status can reliably be confirmed to the surrounding of the application equipment.

The object with regard to the device is achieved by a module as claimed in claim 1. The object with regard to the method is achieved by a method as claimed in claim 7.

The invention starts from the consideration that up to now known methods can be further improved already on basis of the concept of an emergency call system simply by putting effort in further developing the communication module of the emergency call unit; namely by improving the communication module by improved use of the external wireless communication via a communication network and improved use of the internal connection in the application equipment of an appliance. Also the invention recognizes that an emergency call unit or other application equipment can be designed rather simple and cheap but nevertheless also to withstand even hard collisions, impacts and the like adverse effects during an accident of the appliance or other hazardous situation. Thus, the construction and assembling of an emergency call unit in an appliance usually can be provided at comparably low costs, simple and save; thus as recognized by the invention --in contrast to an MMI or the like-- a communication module has a good basis to solve the problems as described above. The concept of the invention suggests to further develop the module by adaptation of in particular the internal interface and functionality of the module beyond the standard known. Advantageously usually data specifying the emergency situation are available in the module for external wireless communication of an emergency call to the communication network upon receipt of the safety data specifying the emergency situation from an application. In particular the eSafety initiative defined a set of data in form of a Minimum Set of Data (MSD) that requires to be transmitted and which amounts to a maximum of 140 bytes. Once one or more emergency situation parameters, like e.g. a sensor signal indicating a hazardous or accident situation or the like, are available internal receipt of safety data specifying the emergency situation via the internal connection can be initiated. An emergency situation parameter generally can comprise any parameter which determines or indicates a hazardous or accident situation or other disadvantageous situations of the appliance like e.g. an airbag activation or a loop situation or a full braking of the appliance. According to the invention it is further suggested for the communication module to access a data entity for internally providing a data item comprising an automated confirmation of the emergency call. Thus, according to the invention, in an application equipment comprising input and/or output units reliable perception information can be outputted by the output unit upon receipt of the data item comprising the automated confirmation of the emergency call. Alternatively or additionally even a communication module can be adapted to be directly connectable to an input and/or output unit such that reliable perception information can be outputted by the output unit upon receipt of the data item directly from the module comprising the automated confirmation of the emergency call.

Further the automated confirmation is for outputting to the surrounding wherein the data item comprising the automated confirmation is transmittable to the application equipment and storable in the module and/or application equipment. Preferable outputting is effected after internal submission of the data item to the application equipment.

As a follow up a system of a module and an appliance, in particular comprising an application equipment, has reliable information about the status of an emergency call and also is in the situation to reliably communicate the status while being resistant against adverse effects during an accident or other hazardous situation.

Indeed, a communication module has all information of an emergency call available as the module is the core component of the application equipment for external wireless communication via the communication network. Also the module is in a save place in the application equipment and likelihood of being destroyed or damaged is dramatically reduced; thus the surrounding can receive a reliable automated confirmation of the emergency call regardless of the circumstances of the emergency situation by means of the output unit, wherein the output unit can be connected to the application equipment and/or to the communication module directly.

These and other advantages will become even clearer from developed configurations of the invention, which are further outlined in the dependent claims. Thereby the mentioned advantages of the proposed concept are even more improved.

As exemplifying outlined in the figures the concept preferably is realized in an M2M module which is capable of receiving a request of an application equipment or other application layer --preferably of an emergency call unit-- to provide a data item comprising an automated confirmation of the emergency call. The data item preferably is an audiofile or the like storable acoustical information item for automated confirmation to the surrounding of the application equipment. Outputting of the information can be effected by means of the application equipment or by the module directly. A prominent example of an acoustical automated confirmation is for instance a voice-prompt. In a preferred exemplifying embodiment of the method for operating an M2M module a request can be received by the M2M module already shortly after or at the same time a decision has been made to release an emergency call in the application equipment wherein the M2M module is connected. Thus, at a rather early point of time at least one predetermined audiofile for instance can be outputted in a kind of playlist via a loudspeaker or the like output means to the surrounding; the output means can be connected to the emergency call unit or connected to the module directly.

Particular advantageous is not only a rather early point of time an emergency call is initiated and the confirmation thereof is outputted to the surrounding. Also outputting of the confirmation can be effected in parallel processing to effecting the emergency call to the wireless communication network; thus in advance and/or parallel to connecting the emergency center wireless to the module a confirmation, in particular a continuous confirmation and the status thereof can be given to the surrounding of the module. As the module has in particular the safety data available for effecting the emergency call also the confirmation can preferably be adapted according to the safety data. Preferably automated confirmation of the emergency call is permanently or non-permanently outputted during a period of output time; preferably said output time is starting on or after receipt of safety data.

In a preferred development --like in particular according to the eSafety initiative defining a set of data in form of a Minimum Set of Data (MSD)-- communicating wirelessly an emergency call to the communication network comprises: building up a voice call communication link, transmitting a set of safety data in the voice call link, and subsequently being adapted for a voice call communication via the voice call communication link. Preferably within this or analog framework automated confirmation of the emergency call is executed, in particular permanently, during a period of output time. Preferably said output time lasts from a begin-point of time before or during or later than start of building up a voice call communication link until a finish-point of time during end of transmitting the set of safety data and/or before or during start of voice call communication.

Preferably rather simple versions of the automated confirmation can be implemented during initializing a module in an application equipment in an appliance. In particular, implementation of a module with its hardware and/or software can be effected prior to release of the appliance, for instance prior to handover of a vehicle to a customer carrying an emergency call unit. Thus, a data entity for internal providing a data item comprising an automated confirmation of the emergency call can be individualized by means of identifiers or other identifying information which are specific for the appliance. The data entity can be stored in a read only memory (ROM) for instance and thus is secure for later willful or erroneous counterfeiting.

In a further development the data item comprising the automated confirmation not necessarily is to be transmitted to the application equipment; thus is only optional but generally preferred to do so. In a particular preferred development the concept of the invention can also be provided solely implemented in a module of the concept; thus implementation of an emergency call functionality in an application equipment can be limited to the very restricted provision of communication parts, like an application equipment controller, whereas the important steps and functionality are effected by the module itself.

For these and other purposes the data item is storable preferably in the module itself rather than on the application equipment. Storage of the data item comprising the automated confirmation is in specific situations also possible by buffering; e.g. also buffering of an emergency call and/or automated confirmation of the emergency call can be effected in the case this at least does not hinder early output of emergency call and/or automated confirmation. E.g. buffering can be necessary due to non fitting programs in the communication link or a slow internal communication itself or due to needs of parallel processing of the internal and external communication of the module. Thus e.g. a beginning part of a transmission of an emergency call and/or automated confirmation can be started and might last for some span of time; during that span of time a further part can still be in preparation and/or buffered. The buffered part can be accessed more easily, e.g. during parallel processing, as it is ready to be outputted. In a further development the module is adapted for providing the data item from the data entity wherein said data item is specific for the emergency situation. In particular the module can be adapted to retrieve a specific data item from the data entity. Advantageously the data entity holds a number of phrases available which can be used for an automated confirmation to be provided in unique data items specific for the emergency situation. Thus, phrases or the like elements of data in the data entity can be combined as a single element or a number of elements in various forms and combination to provide a unique data item specific for the emergency situation. Election upon retrieving data elements from the data entity to provide a unique data item can be achieved during a standard easy procedure or more sophisticated for instance by taking into account the safety date specifying the emergency situation.

The data for exchange between an application equipment and the module particular advantageously comprise for a download of data to the module, in particular the safety data for the emergency call. In particular the safety data comprise information of intent of the emergency call and/or information of content of the emergency call. Thus, safety data are available to the module also for use to retrieve a unique data item from the data entities specific for the emergency situation.

Additionally or alternatively an execution of the emergency call regardless of the kind of emergency call can be outputted to the surrounding. According to the invention the data item can be individualized to the emergency situation by means of using the safety data for retrieving one or more data elements from the data entity to provide a unique data item comprising an individualized automated confirmation of the emergency call.

A data entity and/or a data item is selectable according to the safety data, in particular up to the demands of the emergency situation. For instance, a data entity and/or a data item is selectable according to a manual and/or machine automated origin of the emergency call. In particular, also a data entity and/or a data item is selectable according to a communication link quality.

Additionally or alternatively the exchange data can comprise upload of data to the application equipment, in particular the data item from the data entity comprising the automated confirmation of the emergency call. Output of the data item then is coordinated by the application equipment. However, in a more preferred variant the module itself is adapted to output a data item and/or data entity to an output device. This involves preferably a particular advantageous synergetic use of a unit which is adapted to communicate the emergency call to the emergency center. This requires not only communication means but also voice input and output means which are regular part of instant modules. Thus a unit in the module can synergetically be used whereas the periphery of the module not necessarily has to be adapted for providing the output functionality; in particular a user appliance could be unnecessary once the most important functionality is implemented in the module like in the instant development. Preferably a user appliance only needs little or no adaptation. E.g. sound files or the like acoustic data item can be outputted by a module-driven loudspeaker outside the module and/or outside the application.

In a particular preferred development the module comprises a communication interface for establishing a wireless communication link to the communication network. In particular the communication interface is adapted for wireless communication and connected to an antenna. This kind of communication interface is in particular advantageous for a module to be implemented in an application equipment for a mobile appliance. However, the concept of the instant invention is not restricted to a communication interface for establishing a wireless communication link to the communication network. Inter alia also a physical communication interface can be used additionally or alternatively for line communication of an emergency call via a communication network; in particular in case of an immobile appliance.

In particular an internal interface for connecting the module to the application equipment is adapted for exchange data between the application equipment and the module. Data exchange can be affected by virtue of an AT-command and/or an URC (unsolicited result code). Nevertheless other suitable command concepts can be used on the internal interface connection between the module and the application equipment to provide most effectively communication due to contemporary and/or future standards.

Further it is preferred that the module has a controller adapted for controlling the exchange of data between the application equipment and the module. Preferably a module memory having stored a data entity comprising the confirmation of the emergency call in form of perception information is used. The controller and the memory of the module can be adapted to safely handle a data item comprising the automated confirmation of the emergency call and/or the emergency call itself. Thereby a most appropriate secure buffering of an emergency call itself or confirmation thereof can be effected by means of the module memory, in particular upon control of the module controller.

An automated confirmation of the emergency call is most appropriate provided in acoustical and/or visual and/or sensitive information and/or other perception information for confirmation; in particular in form of a voice-prompt, most preferably an individualized voice-prompt specific for the situation of emergency.

Preferably the data entity can be provided in coded form. Additionally or alternatively an internal data exchange can be coded. In particular unique data item for confirmation via the internal data exchange can be coded. A very preferred kind of coding is a compression coding by using one of the known compression schemes for multimedia data; like e.g. MPEG or audiofile compression. Thereby the communication processing can be speeded up. In particular also a unique data item for communication via the internal data exchange can be coded. Thereby the transmission speed via the internal interface can be optimized. Another kind of coding for preferred use is security coding; thereby unintentional or wilful amendment of data entities is prevented.

Preferably the module has a recall unit adapted at least for accessing in the module memory said data entity for retrieving and/or providing a data item for perception information. The recall unit in its easiest version can be a simple pick unit. In a preferred development the unit is formed as a presentation unit. A presentation unit can be a kind of pick and play back unit having access to the memory and being capable to present the data retrieved during access. In a more sophisticated version the recall unit can have capability for providing the data item according to the safety data or other data received in the download exchange of data by the module. Thus, at least, the recall unit can be adapted to select certain data elements from the data entity to provide a unique data item for confirmation of an emergency call, which is specific to the emergency situation; i.e. in this development the recall unit in particular is capable to select data elements according to the available safety data, if so, and provide an emergency situation specific data item for output to the surrounding.

The data item can be available to the application equipment by means of an upload exchange of the data item from the module to the application equipment, in particular by control of the module controller and/or the application equipment controller. Also, in alternative, the functionality of an application equipment can be reduced way, when more or the most functionality is implemented in the module itself. For instance the module can provide for an emergency call box for buffering the emergency call itself and/or the unique data item carrying the automated confirmation. For instance the module can be configured such that it is capable to provide the steps of initiating the emergency call by its own virtue and providing the automated confirmation of the emergency call to the surrounding. For instance the communication between an emergency call unit and the module can be limited to a simplified download communication from the emergency call unit to the module. A simplified download communication e.g. can be restricted to merely comprise the statement that an emergency call to an emergency centre is to be sent.

Additionally or alternatively a download communication can be limited to the content of safety data, which are to be sent to an emergency centre. In this preferred development, only as a follow up to the statement of the emergency call unit, at first the automated confirmation can be started by the module. Preferably only thereafter a communication link can be build up to the communication network. Preferably only thereafter safety data can be transmitted to the emergency centre. As a result the emergency call unit preferably receives the information that an emergency call has been released and the channel of emergency call is open again. These and other developments can be retrieved in detail as defined in claims 8 to 13 in particular and as described with relation to the drawing.

In a particular preferred embodiment the E-Call unit can be realized not in a higher application layer but instead basically in the module itself. Thereby the sequence of method steps as outlined in claims 10 to 12 can be provided within the module rather than in a combination of module and application equipment of a system. For instance a so-called open platform module can be used wherein programmable instruction follows up in sequence to provide the method steps. Such kind of sequence can be provided in a virtual machine like for instance a JAVA virtual machine. In these and other cases in the application equipment only an application controller is advantageously provided for connecting the module to an appliance signalling bus like a vehicle bus (CAN-Bus) or the like. In such variation the module itself in form of an M2M module can be connected via an UART (Universal Asynchronous Receiver Transmitter) interface. Using said interface the signal for an emergency call can be submitted. Submission for instance can be initiated by means of a crash sensor or the like sensing means for indicating an accident and/or hazardous situation. Also a manual or automated emergency button can be used for this purpose.

For instance an active programmable application can be used running on the M2M module for recognizing an emergency situation and/or emergency event. A request provided by an E-Call unit can be generated on the module itself by the firmware, hardware or other kind of software on the module according to the claimed and described functionality as such. In a preferred embodiment as outlined in the figures a so-called independent M2M module can be provided with a self-sufficient powering source like a current source, a battery or the like. On the other hand an application equipment in form of an emergency call unit or the like can be connected to a battery or other power source for buffering. A power source, in particular a current power source, is permanently available for instance in an appliance like a vehicle or the like. Nevertheless a power source can in emergency situations easier be destroyed than an E-Call unit with embedded battery.

In a particular preferred development, the module memory comprises a number of data entities, wherein one or more of the data entities are combinable according to the specific situation. The combination can be such that as a result a specific data item comprises a situation specific perception information. Nevertheless, each of the data entities can provide one or more data elements wherein the data elements are combinable for one emergency situation to form a specific data item comprising a specific perception information element.

It is advantageous that in the module several data entities like files, in particular acoustic files, are stored. It turned out to be advantageous that each file, like for instance each data entity, is associated with an identifier or the like identifying information. An identifying information can be implemented in a path of a file for instance. Thus, advantageously, an emergency call unit or the like application equipment is capable to send a request to the module accompanied by identifying the requested audio file for instance by means of the associated identifying information as an argument. This is particularly advantageous in the case that, in dependence of the release of the emergency call, different language schemes are provided. For instance, there may be the situation that, upon release of a manual emergency call, another acoustical feedback to the driver of a vehicle is necessary, as compared to an automatic release of an emergency call which, for instance, has it due to an airbag release. Even in the case of different automatic emergency calls, in particular upon release of an airbag or a loop accident, it is possible to provide different language and version of automated confirmation for each situation; thereby language and content of the automated can be adapted up to the demands of the specific situation and the recipient.

As indicated above, in a particular preferred development, the perception information is an acoustical information of specific language and the data entity is selectable in compliance with the language selection according to the specific language. Thus, for support of different languages, it is suggested that, already at a point of time on initialization of the module and/or application equipment, a specific language is predetermined by configuring the firmware of the module and/or application equipment. Thus, suitable audio files can be stored in this language. Additionally or alternatively, possibly depending on available memories path, further audio files of further different languages can be stored in the module memory for instance. The audio files shall be selectable according to a request of automated configuration and/or language as such. This can be preferably established by means of a suitable identifying information or the like identifier.

Generally, the selection can be predetermined and/or context defined and/or instruction defined. In a particular preferred embodiment, a searchable database of language-specific audio files can be provided wherein a data entity comprising an acoustical information of specific language is stored in a language-specific storage area of the module memory. Preferably, audio files can be stored in language-specific file branches and can be associated with a certain correct path; thus, they can be selected and requested directly and identified by means of the path- and/or file-name. These and other information can be used as an argument of the E-Call unit when requesting an automated confirmation of the emergency call.

Further, a separate instruction command or the like request can be used to signalize to the module, in particular by means of the emergency call unit, that audio files of specific kind shall be used for outputting. The command request or the like instruction can be such that it is valid until the next instruction. Audio files fitting to the instruction can be selected as the only ones for outputting a correct automated confirmation of the emergency call in the correct language.

Furthermore, it is advantageous that an automated play back of an audio file is provided in the module. Thereby, the module and/or the emergency call unit is capable to react without any further configuration initialization or adaptation at least with a standard playback in an emergency situation; in particular as a fall back at least even independent of a country code or the like a standard language shall be available for a voice playback being able to be outputted by the module.

In particular, it is preferred that suitable language identification is stored in the module and is recognized during the next output of automated confirmation of the emergency call. The sequence of the steps indicated is particularly preferred when the emergency call module receives from a signaling bus --like a vehicle bus, in particular CAN-bus or the like-- a message that the language of the vehicle MMI changed. In the case the language of change is not stored in audio files of the module memory, the command can be finished with an error message and the language selection of the M2M module can persist unchanged. Some or specific ones of the audio files can be rated as necessary and other as not necessary. In the case that a not necessary audio file is requested for outputting and the language selected is not available, a preferred development provides that outputting of the not necessary message is suppressed in the selected language.

However, in the case initially audio files are stored in the module memory, which do not enclose the files fitting to the actual command, then the module is capable to react with a feedback that no language output is possible. As a consequence, a channel of language is not locked up and the further processing for outputting an automated confirmation of the emergency call and the emergency call itself as follow-up of a communication link built up is continued independently.

In a particular developed development, it is possible that an acoustical information for providing the perception information of the automated confirmation of the emergency call is constituted from one or more audio files. This is particularly advantageous in the case if different emergency situations require for different automated confirmation messages. Thus, the unique data item can be provided by using different combinations of identical data elements and/or data entities, wherein each data element and/or entity has a different complement of automated confirmation usable for different emergency situations in identical form but different combination. Advantageously, single components or contributions can provide for a large variety of unique data items on the one hand and on the other hand by reducing memory space for use, respective efficient use of the available memory space.

In a particular preferred development, initializing audio files can provide for a chain of acoustical information sequence. This is particularly advantageous in the case the build-up of a communication link lasts longer than the outputting of the first audio file. Thus, the first audio file can be started to be outputted in advance whereas the build-up of an automated confirmation of the emergency call in form of acoustical information starts later or is still in process.

A repetition of the same output shall be suppressed. Instead, a second acoustical information can be provided which is different from a first acoustical information. The second acoustical information can be such that its content is adapted to a long time period for build-up of the automated confirmation connection. Thus, the chaining can be continued with more than two acoustical confirmation files.

In a particularly preferred development the module merely receives a hint that an emergency call shall be executed as soon as safety data specifying the emergency situation are received. In the meantime, the module can be activated in the network, whereas the acoustical information of the automated confirmation are provided.

In a particularly preferred development, the M2M module is able to identify problems upon build-up of the communication link to the network. Advantageously, this can be considered upon outputting an acoustic information of the automated confirmation. The kind of consideration is selectable according to the specific demands. Preferably, the module is able to decide on its own virtue that a communication link is not built up as expected and, therefore, an error case shall be defined. Preferably, specific error cases can be foreseen as categories for different audio files.

Alternatively, a module can provide information to a buffer, like an E-Call-Box or the like. The buffer can react instead or later upon an instruction request or the like command for outputting a data item with an automatic confirmation in a predefined way in an error case.

These and other steps are helpful for a driver of a car for instance; nevertheless in a total error case and confirmation thereof nevertheless the mobile telephone can be used for a call of help by the driver. Namely, in such a case, the driver of the vehicle for the first time receives at all the notice that an automatic emergency call cannot be sent to the network; thus, the developed concept as described saves time for initiating a manual emergency call by virtue of the driver.

In summary, the concept described here allows to provide an application equipment or the like application layer, for instance an E-Call unit, with a rather simple set, like a firmware, hardware, or software or the like. In particular, the set used is the same which shall be affordable for standardization efforts in the emergency call concept. However, the emergency call module, like an M2M module or the like, can be provided in an advantageous way. Preferably the module is adaptable in the setting of a module memory and module controller, in particular capacity thereof. Voice-prompts can be stored in the module, for instance by means of audio files or the like. Also, the module can be adapted to provide coding and decoding and inputting and outputting.

In particular in view of typical vehicle MMIs or the like, the suggested concept has the advantage that an E-Call unit can be used with power from a battery or the like upon cutoff of a power source. In the case of an open platform module, the E-Call unit as such can be reduced to such simple structure of only a vehicle bus controller connectable to the M2M module. A further frame for processing, in particular a CPU or the like sophisticated logics, is not necessary in the emergency call unit. Further aspects of the present invention relate to computer programs. One aspect is a computer program comprising executable code suitable for controlling operation of a radio device in accordance with a method of the third aspect of the invention or one of its embodiments when executed by a processor of the radio device. Another computer program aspect is a computer program comprising executable codes suitable for controlling operation of a controller device in controlling operation of a group of radio device in accordance with a method of the fourth aspect of the invention when executed by a processor of the controller device. The computer programs each are typically provided on a storage medium.

For a more complete understanding of the invention, the invention will now be described in detail with reference to the accompanying drawing. The detailed description will illustrate and describe what is considered as a preferred embodiment of the invention. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does exclude a plurality.

In the following, further embodiments of the various aspects of the invention will be described with reference to the enclosed drawing; in particular, the drawing shows in
- Fig. 1: a block scheme of a system of an application equipment and a module, wherein the module is implemented as an M2M module in an E-Call unit and the system further is implemented in a vehicle by connection of an emergency call controller to a vehicle bus;
- Fig. 2: shows a generalized sequence of a signalizing process in case of an emergency indication, wherein outputting of the perception information is in form of an acoustic information of specific language for providing an automated confirmation of the emergency call;
- Fig. 3: depicts a detail I of the signalizing process shown in Fig. 4 for adjusting a language selection adapted for selecting the language of the next automated confirmation of an emergency call;
- Fig. 4: shows a block scheme of an output and input device, namely a loudspeaker and a microphone, which are directly connected to the module by means of a switch in a output/input line which fixes a priority communication in case of an emergency situation to the recall unit of the module.

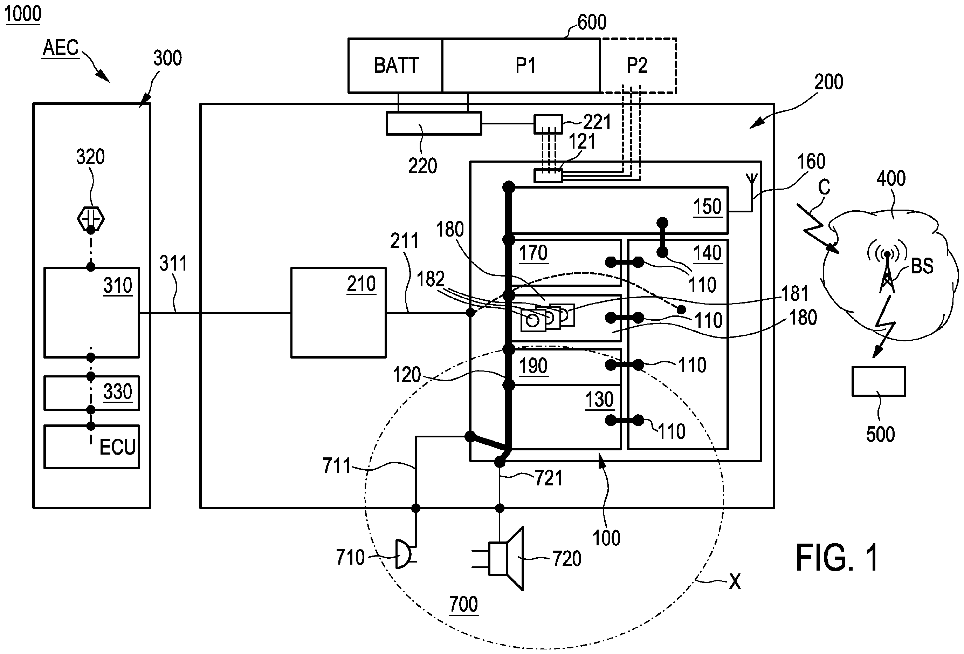

Fig. 1 depicts schematically a vehicle or the like exemplifying mobile appliance 1000 comprising an electronic system 300 of the vehicle connected to an emergency call unit 200 as an example of an application equipment according to the concept of the invention, wherein the emergency call unit 200 carries an electronic module 100 for external wireless communication via a communication network 400. In this case the wireless communication network 400 is a cell based telephone communication network having one or more base stations BS for wireless connection to an antenna 60 of the electronic module 100 and a service centre 500 on the other hand, wherein the service centre 500 in this case is an emergency centre. Thus the components 100, 200, 300 are implemented as a accident and emergency electronic system AEC in the mobile appliance 1000.

The electronic system 300 of the vehicle comprises a vehicle bus 310 like a CAN-bus or the like signaling bus and a sensor system 320 comprising one or more sensors for detecting an accident situation, which is the reason for an emergency situation. A sensor of the sensor system 320 for instance can be implemented as a crash sensor or a relay or an actuator and/or sensor connected to an airbag or the like safety system.

The vehicle bus 310 is communicatingly connected to an emergency call unit controller 210 in the emergency call unit 200. The emergency unit controller 210 is internally communicatingly connected to the electronic module 100 for external wireless communication via the communication network 400. The internal signalizing connection first part 311 between the vehicle bus 310 and the emergency call unit controller 210 is established by a bus line. The internal signalizing connection second part 211 between the emergency call unit controller 210 and the communication module 100 is established by a physical electronic connection for transmitting control signals to a module controller 140.

In more detail, in the instant case the M2M module 100 is integrated in the emergency call unit 200 which internally is connected via the first part 311 to the vehicle bus 310. The module controller 140 is situated as a central control unit which receives commands via an AT interface from the emergency call unit controller 210 at first but also from one or more of the components 170, 180, 190, 130 via the control bus 110 as depicted schematically. Also outputting commands of the module controller 140 to other components is possible. Preferably, the module controller 140 interprets and further submits commands received from the emergency call controller 210 to the further electronic components of the communication module 100.

Further, the communication module 100 comprises a communication interface 150, wherein the aforementioned antenna 160 for wireless communication is connected to the communication interface 150. The antenna 160 comprises a high frequency unit (HF unit) for contacting the wireless network 400. The wireless network 400 is adapted to communication by means of one or more of the contemporary or future technology standards for mobile communication like for instance the GSM, EDGE, GPRS, UMTS and/or LTE standard.

The module controller 140 internally is connected by a control bus to a module memory 180, which inter alia has a reserved storing area for one or more data entities 181 carrying a perception information 182 in form of an acoustical information of specific language; for instance a voice-prompt or the like. Each of the voice-prompts can be considered as a data element, which is combinable with other data elements to provide an individual and unique data item. An exemplifying data item can be stored internally in the module memory 180 and/or in the module emergency call box 190 for buffering for instance.

The communication module 100 also comprises a coding/decoding unit 170, wherein the voice-prompts can be coded and decoded to be stored in form of a data element in the module memory 180. In the instant case the coding/decoding unit 170 is specifically adapted to code and/or decode acoustical information like for instance audio files or other acoustical information carrying data entities, in particular voice-prompt entities. Thus, the coding and decoding unit 170 has access to the module memory 180 and the data entities 181 respective the acoustical information 182 stored therein. Whereas the coding/decoding unit 170 is primarily adapted to code and decode data, it is nevertheless in an alternative or variant additionally possible to further simplify the unit 170 as a simple decoding unit. Thus, coding means can be saved in the case sufficiently predefined an outlined acoustical information is provided in the data entities 181.

In a particular preferred embodiment the coding/decoding unit 170 is implemented in the module controller 140 rather than providing the coding/decoding unit 170 as a separate unit connected to the module controller 140 via a control bus 110. However, a separate coding/decoding unit 170 can be advantageous in an alternative as shown in Fig. 1 due to an improved performance of the communication module provided thereby. In this case, the module controller 140 is capable to provide outputting of audiofiles in an advantageous way in parallel to a built up of a connection to the wireless communication network 400 for submitting an emergency call to an emergency center 500 for instance.

A recall unit 130, which in the instant embodiment is formed as a presentation unit, has access via a data bus 120 to the module memory 180 and/or the emergency call box 190 for retrieving a data item and/or a voice-prompt directly from a data entity 182 and submitting the voice-prompt to the communication interface 150 of the communication module 100. The recall unit 130 is primarily adapted to synthesize a voice or tones or other acoustical information from the data entity or a data item and output the synthesized acoustical information to the loudspeaker 720. Vice versa the recall unit 130 can be adapted to record acoustical information received by a microphone 710 and provide these as acoustical data to a code and decode unit 170 for storing into an emergency call box 190 and/or the module memory 180 or for transmitting the coded acoustic information via network 400 to the emergency center 500.

These and other data submission activities are controlled via the module controller 140, wherein control signals are submitted to one or more of the entities 130, 150, 180, 170 via a control bus 110 in the communication module 100. In the instant case, the emergency call unit 200 further provides a separate emergency call unit controller 210 for controlling the M2M module 100 and communicate with the electronic system 300 of the mobile appliance 1000 via a first part 311 and the vehicle bus 310. The vehicle bus internally provides information from the mobile appliance 100 which for instance can be received by a sensor system 320 or other means which not necessarily have to be provided as sensors. Indeed, further control systems can be provided by a central vehicle control unit 330 or other units 340 of the electronic system 300 of the mobile appliance 1000.

For powering the emergency call unit or the like application equipment 200, a power system is provided. The power system 600 can be implemented in the emergency call unit 200 internally or can be provided external to the emergency call unit 200 in a periphery of the call vehicle, for instance as part of the accident and emergency call system AEC. The power unit 600 in a first alternative comprises a first power unit P1 connected via a power line to a power interface 220 for powering the emergency call unit 200 and via a second power interface 230 and respective power lines to the communication module 100 for powering the communication module. Also a battery BATT can be connected to the power interface 220 to secure a sufficient power provision to the accident and emergency call system AEC in the case the first power source fails for what reason ever, in particular in an accident. As a second alternative a battery BATT and a second power source P2 can be provided wherein the second power source P2 via power lines shown in dashed form are directly connected to a further power interface 121 of the communication module 100. In this case, the communication module 100 is independent in the power provision and thus is adapted for independent communication regardless of the situation of the emergency call unit 200. Indeed the second alternative secures power to the communication module 100 and secure connection of the communication module 100 via the first and second part 311, 312 and the emergency call controller 210 to the vehicle bus 310.

An input and output means 700 can be provided connected to the emergency call unit 200 and/or the communication module 100 directly via input and output lines. The MMI or the like input and output means 700 comprises a microphone 710 and a loudspeaker 720. The loudspeaker 720 is connected via an output line 721 to the emergency call unit 200 and the communication module 100. The microphone 710 is connected via input line 711 to the emergency call unit 200 and the communication module 100. The loudspeaker 720 and the microphone 710 in this case are directly connected to the emergency call unit 200 however, can also be directly used by the communication module 100 via input and output lines 711, 712 in this case.

The communication module in Fig. 1 is shown and realized as a so called M2M module. Whereas the instant embodiment and implementation of the communication module 100 is described with various components shown as boxes schematically in an exemplifying combination, nevertheless, it should be clear that the combination of the components also can be situated in various variants in the scope of the concept of the instant invention. For instance, the module controller 140 can be implemented and adapted such that an emergency call unit controller not necessarily needs to be provided as a separate second controller in the emergency call unit 200 but instead the module controller 140 and the emergency call unit controller 210 can be implemented in a integrated form within one controller unit. Also, this holds for a further integrated combination of the electronic components shown as boxes with reference numbers 150, 170, 180, 189, 130. In particular, the memory based components like the module memory 180, the emergency box can be realized within one memory unit. The memory unit can also be adapted to integrate the coding/decoding unit 170 and/or the recall unit 130. Also in a variant the recall unit 130 and the coding/decoding unit 170 can be integrated in one unit. Further variants and alternatives beyond those described above are possible depending on the situation and application frame of the accident emergency call system for mobile or other appliances.

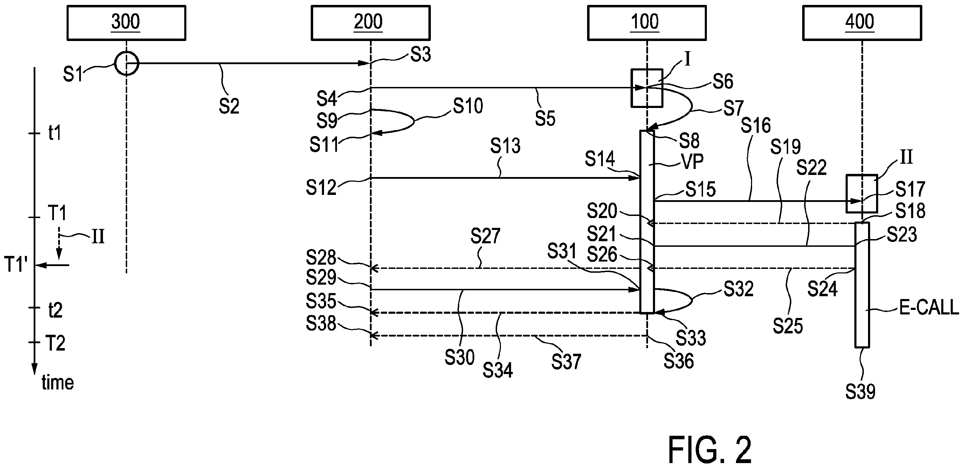

Whereas the general functions of the accident emergency call system has been described already with Fig. 1 in Fig. 2 an exemplifying signalizing sequence is shown in a flow diagram which depicts signal inputs and outputs for each layer of a vehicle bus 310 and application equipment 200 in form of the emergency call unit, further the communication module 100 in form of the M2M module and the wireless communication network 400, namely here for connection to the emergency call center 500.

In an exemplifying accident and emergency call process AEC the electronic system 300 of a mobile appliance may receive a sensoring control or other signal indicative of an emergency situation like for instance resulting from a collision of vehicle or the like accident in step S1. In step S2 a respective emergency indicating signal is internally communicated to the emergency call unit by means of communication between a vehicle bus 310 and an emergency call unit controller 210. After receipt of an emergency indicating signal in step S3 by the emergency call unit controller 210 in step S4 a request for outputting a voice-prompt or the like automated confirmation of an emergency situation and/or call is generated in the emergency call unit controller 210 and submitted for outputting in step S5 to the module controller 140 of the communication module 100. In step S6 upon receipt of the request, a start of the voice-prompt output is initiated. Upon activation of outputting an acoustical information in form of a voice-prompt or the like to the M2M module the activation command can be realized in form of an AT command.

In steps S4, S5, S6 and the following steps further the activation command can be accompanied by outputting at least an identifying information. The identifying information is for identifying a respective audio file selected as a data entity within a number of data entities to be selected by the communication module in a module memory 180, namely to be selected by the module controller 140 in the module memory 180. The selection in particular regards language selection but may also be with regard to other situations of the accident and parameters of the emergency. In the following procedure steps it will become clear that outputting of the audio file lasts as long as the communication module 100 in form of the M2M module receives a further request by the emergency call unit to finish the output procedure. The following process can --but not necessarily has to-- be implemented in a loop programming wherein the voice-prompt is repeated once the acoustic file containing the voice-prompt has been played to its end.

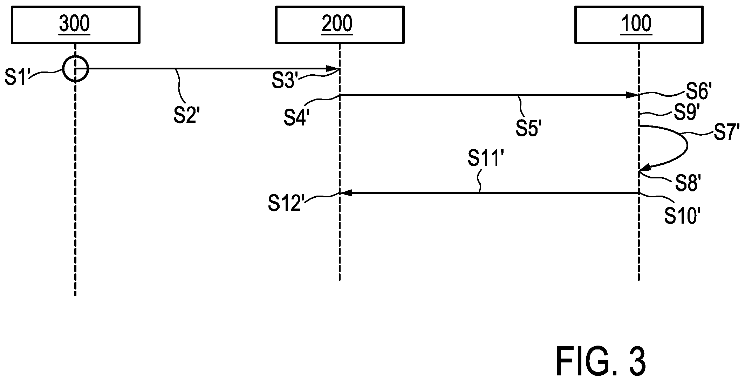

Further, step S6 may provide for further elaborated procedure with regard to the language selection in box I which is depicted in more detail in Fig. 3 as outlined below with regard to Fig. 3.

In a step S7, outputting of the voice-prompt is requested by the module controller 140; further the sequence of retrieving the voice-prompt from the module memory 180, decoding respective data of a data entity 181 to retrieve an acoustical information 182 by means of the decoding unit 170 starts and finally a playback is started in recall unit 130 for outputting the acoustical information in a loudspeaker 720. In step S8 the output of the voice-prompt indeed starts namely at point of time t1 and --as will be seen further below-- lasts until point of time t2 wherein the duration of the voice-prompt is indicated by the bar in Fig. 2 labeled as VP.

In step S9, the module controller 140 will also receive a set of safety data, namely here minimum safety data MSD, from the electronic system 300 and will continue to collect the safety data in step S10 until all safety data are received in step S11. The emergency call unit 200 will be able to execute steps S9 to S10 and S11 in parallel and while the steps S6, S7 and S8 are executed by the communication module 100. Thus, whereas the voice-prompt VP has already been started in step S8 in the instant embodiment, in step S12 a request of the emergency call unit controller 210 is generated and in step S13 the request is submitted to the communication module 100 and received in step S14. Thus, in step S15 the communication module will start to build-up a communication link to the network 400. A respective signaling communication is submitted in step S16 to a basis station of the communication network and received by the communication network 400 in step S17.

Box II depicts a situation, wherein there is a problem with regard to establishing a communication link, which will be described in more detail below.

In the instant embodiment, in step S18 a voice connection link is confirmed by signaling in step S19 received by the module in step S20. In step S21, a transmission of minimum safety data MSD is initiated by the module 100 and the MSD data are submitted in step S22 to the network and are received in step S23. There upon --since the communication link is established in step S18-- an emergency voice call labeled as E-Call is initiated at the counterpart in the network 400, namely the emergency center 500 and lasts already during receipt of MSD data in step S23 and completed transmission of MSD data in step S24. The completion signaling submission in step S25 is received in step S26 by the module 100. At that time, completion of transmission of MSD data from module 100 to the network 400 is confirmed in step S26 and the voice call activation is confirmed from the module 100 to the emergency call unit 200 in a step S27 after receipt of the voice call activation confirmation in step S28 at the emergency call unit 200. Then the request for end of outputting the voice-prompt VP is generated in step S29 by means of the emergency call controller 210 and submitted in step S30 to the module 100. Upon receipt of the end of voice-prompt request in step S31, as a consequence, the end of voice-prompt outputting is generated in step S32 by the module controller 140 and submitted to be received at the recall unit 130 in step S33. Thus, at point of time t2 in step S33, this ends outputting of the voice-prompt VP after start at point of time t2.

In step S34, completion of the voice-prompt is responded by signaling to the emergency call unit 200 which is received in step S35. During that time, namely already since in step S18 a communication link is confirmed by the network at time T1 the emergency call is pending and executed to the emergency center 500. Upon initiation in step S36, now the module receives that the data transmission of the E-Call is terminated at time T2 and signalizes in step S37 to the emergency unit 200. This signal is received in step S38 by the module 100 and external communication link is open for voice communication with the emergency call center 400. Consequently also the output of an automated confirmation of the emergency call is open again. Indeed the instant procedural exemplifying embodiment shows that outputting of an emergency call via externally communicating an emergency call to the communication network between point of times T1 and T2 is possible in parallel while already at a very early point time t1 and lasting until t2 a confirmation is given to the surrounding, namely for instance a driver of a vehicle in accident or the like.

As indicated with step S17 in box II, a missing communication link can be followed up by buffering the E-Call in an emergency call box 190 of the module 100. Thus, step S18 moves to a later point of time T1' for the case II; this situation is depicted on the left hand time axis by shift of T1 to T1' in Fig. 2.

The situation of box I in Fig. 2 at step S6 is further outlined in Fig. 3. In detail, Fig. 3 shows the suggested signalizing procedure for collecting a language; in particular a language selecting can be performed asynchronous to an execution of an emergency call, which will become clear from the further description. For instance, in this example it can be assumed that the user of a vehicle MMI in step S1' has changed the user language of the vehicle. This can be the case for example by changing a language selection in multimedia applications of a vehicle MMI, which is a usual function of an MMI between a user and a vehicle. It can be assumed that via a vehicle bus 310 the emergency call unit 200 is informed about this change of language. Also other triggers from the sequence of Fig. 3 are possible: for instance connection of a diagnostic unit or other kind of computer for configuration of the vehicle either at a user or a seller or the like. In each case, the emergency call 200 may react on a selection or change of user language by receiving in step S2' a command of language selection in step S3'. Further, the emergency call unit 200 may start in step S4' a language selection request of step S5'. The request is internally submitted to the communication module 100 in step S5'. Thus, in step S6' the communication module 100 receives a request to reselect a language for further communication. The steps S1' to S8' indeed can be executed in parallel to the steps S1 to S8 as described in Fig. 2.

Nevertheless also a check of language selection in step S7' may be started at a later point of time S9' later than S6' by the communication module 100.

Preferably, a language code --for instance a MARC language code-- can be submitted as an argument. In the M2M module now in step S7' it is checked, whether the submitted language code fits to one or more of existing data entities 181, namely audiofiles 182 in the modules memory 180. It is possible that no matching audiofile is found for the selected language or other audiofiles fit to a selected language but it turns out to be that these fitting audiofiles do not form a complete set of audiofiles; thus some of a set of audiofiles are missing. In the latter case, when some audiofiles are missing although a number of audiofiles per language are considered to be good, this state can be accepted nevertheless. For instance, a chaining of several audiofiles can be intended but in the case in the chain a single audiofile misses nevertheless outputting of a not complete chain can be sensible.

However, in the case in step S7' the module 100 finds that a fitting audiofile exists to the selected language and/or all audiofiles of a fitting set of audiofiles are complete, then the selected language is internally stored in step S10' and the storage situation is submitted in step S11'; given as feedback signal to the emergency call unit 200 received in step S12'. Thus, at step S12' the emergency call unit knows that a reselection of language has been successful also with the module 100.

On the other hand no change of language is taken and instead of a stored language selection of step S1 1' an error code is given back to the emergency call unit.

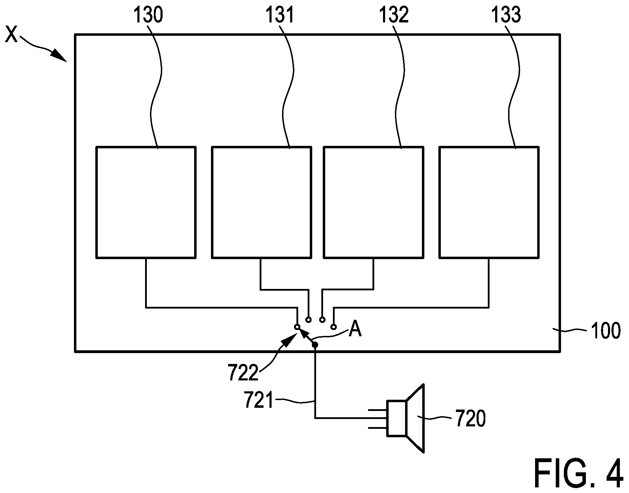

Fig. 4 shows in a detailed schematic view the interface of the module 100 to the loudspeaker 720, wherein the output line 721 is further specified with a switch 722 which is selective and exclusive with regard to choosing either the recall unit 130 as shown in Fig. 1 but also other acoustic information units like a ring up tone unit 131, a voice channel 132 or the like acoustical information units 133. In detail Fig. 4 shows detail X of Fig. 1 wherein a voice output can be activated to the loudspeaker 720. According to the concept of the instant invention, the loudspeaker 720 can be selectively used for output such that only a audiofile recalled by means of the recall unit 130 is connected to the loudspeaker 720 in case of an emergency situation. All other acoustical information files 133 or sources of acoustical information like a ring up tone module 131 and a voice channel 132 for incoming calls are suppressed; this means they remain not connected by switch 720 in position A to the recall unit 130 as shown in Fig. 4. The reason is that in an emergency situation the recall unit 133 has highest priority for playback of acoustical information. All other acoustical information units 133 or sources 131, 132 are therefore blocked and have no connection to the loudspeaker 720. Only as follow up of the sequence of steps S33, S34, S35 in Fig. 2 a further voice confirmation is allowed. Possibly outputs to the loudspeaker 720, in particular from a voice connection of a voice channel 132, for instance the one of the E-Call of steps S18 to S39 now can be outputted by the loudspeaker 720.

## Claims

1. Communication module (100), adapted for wireless communication via a communication network (400) and internal connection to an appliance (1000), by means of an application equipment (200), the communication module comprising a module memory having stored a number of data entities (182) comprising the confirmation of the emergency call in form of perception information;
wherein upon detection of an emergency situation parameter of the appliance (1000) the communication module (100) is adapted to
- internally receive via the internal connection (211) safety data specifying the emergency situation;
- externally communicate wirelessly an emergency call to the communication network (400), comprising a set of safety data upon receipt of the safety data specifying the emergency situation,
wherein the communication module (100) is further adapted to
- access at least a data entity (181) stored in the communication module (100) for providing a data item comprising an automated confirmation of the emergency call, said automated confirmation being for outputting to the surrounding wherein the data item comprising the automated confirmation is transmittable to the appliance (1000), and storable in the communication module (100),
wherein one or more of the data entities are combinable to form one emergency situation specific data item comprising a situation specific perception information,
and the one or more data entities are selectable according to one or more of:
- the safety data up to the demands of the emergency situation,
- a manual and/or machine automated origin of the emergency call,
- a communication link quality.

2. Communication module (100) of claim 1 wherein the communication module (100) is adapted for providing the data item from the data entity (181) by retrieving the data item from the data entity (181), wherein said data item and/or retrieving is specific for the emergency situation parameter and/or a group of emergency situation parameters.

3. Communication module (100) of one of the preceding claims, comprising:
- a communication interface (150) for establishing a wireless communication link to the communication network (400), wherein the communication interface (150) for wireless communication is connected to an antenna (160),
- an internal interface (211) for connecting the communication module (100) to the appliance (1000), by means of the application equipment (200), wherein the internal interface is adapted for internal exchange of data between the appliance (1000), and the communication module (100)
- a module controller (140) adapted for controlling the internal exchange of data between the communication module (100) and the appliance (1000),
- a recall unit (130) adapted for accessing in the module memory said data entity (182) providing the data item of perception information.

4. Communication module (100) of one of the preceding claims wherein the automated confirmation of the emergency call is a visual, acoustical and/or sensitive information and/or other perception information for confirmation.

5. Communication module (100) of one of the preceding claims wherein the perception information is an acoustical information of specific language and the data entity and/or data item is selectable in compliance with a language selection according to the specific language, wherein the selection is predetermined and/or context defined and/or instruction defined.

6. Communication module (100) of claim 5 wherein a data entity and/or data item comprising an acoustical information of specific language is stored in a language specific storage area of the module memory.

7. Method for wireless communication via a communication module (100) to a communication network (400), wherein the communication module (100) is connected to an appliance (1000) by means of an application equipment (200), receiving a signal of emergency situation in the application equipment (200) and receiving a request for confirmation of an emergency call in the communication module (100),
the communication module comprising a module memory having stored a number of data entities (182) comprising the confirmation of the emergency call in form of perception information; wherein upon detection of an emergency situation, the communication module (100)
- internally receives safety data specifying the emergency situation;
- communicates wirelessly an emergency call to the communication network (400), comprising a set of safety data upon receipt of the safety data specifying the emergency situation, whereby the communication module (100) further
- accesses at least one data entity (182) comprising an automated confirmation of the emergency call for internal submission and internally submitting to the application equipment (200) the automated confirmation,
wherein one or more of the data entities are combinable to form one emergency situation specific data item comprising a situation specific perception information,
and the one or more data entities are selectable according to one or more of:
- the safety data up to the demands of the emergency situation,
- a manual and/or machine automated origin of the emergency call,
- a communication link quality,
via the communication module (100) outputting the automated confirmation to the surrounding by means of an output unit.

8. Method according to claim 7,
wherein the outputting of the automated confirmation to the surroundings is conducted during a period of output time, said output time starting on or after receipt of safety data.

9. Method according to at least one of the claims 7 or 8, wherein
- communicating wirelessly an emergency call to the communication network (400) comprises: building up a voice call communication link, transmitting a set of safety data in the voice call link, and subsequently being adapted for a voice call communication via the voice call communication link; and wherein
- automated confirmation of the emergency call is executed, during a period of output time, said output time lasting from a begin-point of time before or during or later than start of building up a voice call communication link until a finish-point of time during end of transmitting the set of safety data and/or before or during start of voice call communication.

10. Method of claim 7 to 9, executed in a system of application equipment (200) and communication module (100) of one of the preceding claims, comprising the steps of:
- in the application equipment (200) collecting safety data specifying the emergency situation
- in the communication module (100) internally receiving safety data specifying the emergency situation
- in the communication module (100) internally receiving request for externally wireless communication of an emergency call to the communication network (400) upon receipt of the safety data specifying the emergency situation
- in the communication module (100) building up a communication link for externally wireless communication of an emergency call to the communication network (400) upon receipt of the safety data specifying the emergency situation.

11. Method according to claim 10,
wherein the steps of outputting the automated confirmation and building a communication link in the communication module (100) are processed at least partially in parallel.

12. Method of one of claims 7 to 11, comprising the further steps of:
- in the communication module (100) submitting safety data to an emergency call center (500) via the wireless communication link to the communication network (400) and receiving feedback of the emergency call center (500)
- in the application equipment (200) internally receiving feedback of the emergency call center (500)
- in the communication module (100) receiving a request for finishing outputting of the automated confirmation of an emergency call in a communication module (100)
- via the communication module (100) finishing outputting of the automated confirmation of an emergency call with highest priority and in the application equipment (200) unlocking the output unit
- in the communication module (100) activation of the communication link to the emergency call center (500) for voice communication.

13. Method as claimed in one of claims 7 to 12 wherein upon any non-fitting, of a language selection of the specific language and/or a communication link, the step of wireless communication of an emergency call is processed in parallel to accessing a data entity (182) comprising an automated confirmation of the emergency call.

## Patentansprüche

1. Kommunikationsmodul (100), das zur drahtlosen Kommunikation über ein Kommunikationsnetz (400) und zur internen Verbindung mit einer Vorrichtung (1000) mittels einer Anwendungseinrichtung (200) eingerichtet ist, wobei das Kommunikationsmodul einen Modulspeicher aufweist, in dem eine Anzahl an Datenentitäten (182) gespeichert ist, die die Bestätigung des Notrufs in Form von Wahrnehmungsinformationen umfassen,
wobei bei der Erfassung eines Notsituationsparameters der Vorrichtung (1000) das Kommunikationsmodul (100) dazu eingerichtet ist,
- über die interne Verbindung (211) die die Notsituation spezifizierenden Sicherheitsdaten intern zu empfangen;
- beim Empfangen der die Notsituation spezifizierenden Sicherheitsdaten einen Notruf, der einen Sicherheitsdatensatz umfasst, drahtlos extern zu dem Kommunikationsnetz (400) zu übertragen,
wobei das Kommunikationsmodul (100) ferner dazu eingerichtet ist,
- zumindest auf eine im Kommunikationsmodul (100) gespeicherte Datenentität (181) zuzugreifen, um ein Datenelement bereitzustellen, das eine automatische Bestätigung des Notrufs umfasst, wobei die automatische Bestätigung für die Ausgabe an das Umfeld vorgesehen ist, wobei das die automatische Bestätigung umfassende Datenelement zu der Vorrichtung (1000) weitergeleitet und im Kommunikationsmodul (100) gespeichert werden kann,
wobei eine oder mehrere der Datenentitäten so kombinierbar sind, dass ein für die Notsituation spezifisches Datenelement gebildet ist, das eine situationsspezifische Wahrnehmungsinformation umfasst,
und wobei die eine oder mehrere Datenentität(en) ausgewählt werden kann bzw. können aus einem oder mehreren der Folgenden:
- den Sicherheitsdaten entsprechend den Anforderungen der Notsituation und/oder
- einer manuellen und/oder maschinenautomatisierten Herkunft des Notrufs und/oder
- einer Kommunikationsverbindungsqualität.

2. Kommunikationsmodul (100) nach Anspruch 1, wobei das Kommunikationsmodul (100) dazu eingerichtet ist, das Datenelement aus der Datenentität (181) durch Abrufen des Datenelements aus der Datenentität (181) bereitzustellen, wobei das Datenelement und/oder das Abrufen für den Notsituationsparameter und/oder für eine Gruppe von Notsituationsparametern spezifisch ist.

3. Kommunikationsmodul (100) nach einem der vorhergehenden Ansprüche, mit:
- einer Kommunikationsschnittstelle (150) für die Herstellung einer drahtlosen Kommunikationsverbindung mit dem Kommunikationsnetz (400), wobei die Kommunikationsschnittstelle (150) für die drahtlose Kommunikation mit einer Antenne (160) verbunden ist,
- einer internen Schnittstelle (211) für die Verbindung des Kommunikationsmoduls (100) mit der Vorrichtung (1000) mittels der Anwendungseinrichtung (200), wobei die interne Schnittstelle für den internen Datenaustausch zwischen der Vorrichtung (1000) und dem Kommunikationsmodul (100) eingerichtet ist,
- einer Modulsteuereinheit (140), die für die Steuerung des internen Datenaustauschs zwischen dem Kommunikationsmodul (100) und der Vorrichtung (1000) eingerichtet ist,
- einer Rückrufeinheit (130), die eingerichtet ist, im Modulspeicher auf die Datenentität (182) zuzugreifen, um das Datenelement der Wahrnehmungsinformation bereitzustellen.

4. Kommunikationsmodul (100) nach einem der vorhergehenden Ansprüche, wobei es sich bei der automatischen Bestätigung des Notrufs um eine visuelle, akustische und/oder sensitive Information und/oder um andere Wahrnehmungsinformationen zur Bestätigung handelt.

5. Kommunikationsmodul (100) nach einem der vorhergehenden Ansprüche, wobei es sich bei den Wahrnehmungsinformationen um eine akustische Information in einer spezifischen Sprache handelt und die Datenentität und/oder das Datenelement in Übereinstimmung mit einer Sprachauswahl entsprechend der spezifischen Sprache ausgewählt werden kann, wobei die Auswahl vorbestimmt und/oder durch den Kontext definiert und/oder durch einen Befehl definiert ist.

6. Kommunikationsmodul (100) nach Anspruch 5, wobei eine Datenentität und/oder ein Datenelement, die bzw. das eine akustische Information in einer spezifischen Sprache umfasst, in einem sprachspezifischen Speicherbereich des Modulspeichers gespeichert ist.

7. Verfahren zur drahtlosen Kommunikation mit einem Kommunikationsnetz (400) über ein Kommunikationsmodul (100), wobei das Kommunikationsmodul (100) mittels einer Anwendungseinrichtung (200) mit einer Vorrichtung (1000) verbunden ist, wobei in der Anwendungseinrichtung (200) ein Notsituationssignal empfangen wird und im Kommunikationsmodul (100) eine Aufforderung zur Bestätigung eines Notrufs empfangen wird,
wobei das Kommunikationsmodul einen Modulspeicher aufweist, in dem eine Anzahl an Datenentitäten (182) gespeichert ist, die die Bestätigung des Notrufs in Form von Wahrnehmungsinformationen umfassen, wobei bei der Erfassung einer Notsituation das Kommunikationsmodul (100)
- intern Sicherheitsdaten empfängt, die die Notsituation spezifizieren;
- beim Empfangen der die Notsituation spezifizierenden Sicherheitsdaten einen Notruf, der einen Sicherheitsdatensatz umfasst, drahtlos zu dem Kommunikationsnetz (400) überträgt,
wobei das Kommunikationsmodul (100) ferner
- zumindest auf eine Datenentität (182), die eine automatische Bestätigung des Notrufs umfasst, zugreift, um diese intern abzugeben und intern die automatische Bestätigung an die Anwendungseinrichtung (200) abzugeben,
wobei eine oder mehrere der Datenentitäten so kombinierbar sind, dass ein für die Notsituation spezifisches Datenelement gebildet wird, das eine situationsspezifische Wahrnehmungsinformation umfasst,
und wobei die eine oder mehrere Datenentität(en) über das Kommunikationsmodul (100), das die automatische Bestätigung mittels einer Ausgabeeinheit an das Umfeld ausgibt, ausgewählt werden kann bzw. können aus einem oder mehreren der Folgenden:
- den Sicherheitsdaten entsprechend den Anforderungen der Notsituation und/oder
- einer manuellen und/oder maschinenautomatisierten Herkunft des Notrufs und/oder
- einer Kommunikationsverbindungsqualität.

8. Verfahren nach Anspruch 7, wobei das Ausgeben der automatischen Bestätigung an die Umgebung während einer Ausgabezeitperiode durchgeführt wird, wobei die Ausgabezeit beim Empfangen oder nach dem Empfangen von Sicherheitsdaten beginnt.

9. Verfahren nach mindestens einem der Ansprüche 7 und 8, wobei
- die drahtlose Übertragung eines Notrufs zu dem Kommunikationsnetz (400) Folgendes umfasst: Herstellen einer Sprachanrufkommunikationsverbindung, Weiterleiten eines Sicherheitsdatensatzes in der Sprachanrufverbindung, wobei es anschließend für eine Sprachanrufkommunikation über die Sprachanrufkommunikationsverbindung geeignet ist; und wobei
- die automatische Bestätigung des Notrufs während einer Ausgabezeitperiode ausgeführt wird, wobei die Ausgabezeit von einem Anfangszeitpunkt vor oder während oder nach dem Beginn des Herstellens einer Sprachanrufkommunikationsverbindung bis zu einem Endzeitpunkt bei der Beendigung der Weiterleitung des Sicherheitsdatensatzes und/oder vor oder bei Beginn der Sprachanrufkommunikation dauert.

10. Verfahren nach den Ansprüchen 7 bis 9, das in einem System aus einer Anwendungseinrichtung (200) und einem Kommunikationsmodul (100) nach einem der vorhergehenden Ansprüche ausgeführt wird und folgende Schritte umfasst:
- Sammeln, in der Anwendungseinrichtung (200), von Sicherheitsdaten, die die Notsituation spezifizieren,
- internes Empfangen, im Kommunikationsmodul (100), von Sicherheitsdaten, die die Notsituation spezifizieren,
- internes Empfangen, im Kommunikationsmodul (100), einer Aufforderung, einen Notruf beim Empfangen der die Notsituation spezifizierenden Sicherheitsdaten extern drahtlos zu dem Kommunikationsnetz (400) zu übertragen,
- Aufbauen, im Kommunikationsmodul (100), einer Kommunikationsverbindung für eine externe drahtlose Übertragung eines Notrufs zu dem Kommunikationsnetz (400) beim Empfangen der die Notsituation spezifizierenden Sicherheitsdaten.

11. Verfahren nach Anspruch 10, wobei die Schritte des Ausgebens der automatischen Bestätigung und des Herstellens einer Kommunikationsverbindung im Kommunikationsmodul (100) zumindest teilweise parallel abgearbeitet werden.

12. Verfahren nach einem der Ansprüche 7 bis 11, das die folgende weiteren Schritte umfasst:
- Übermitteln, im Kommunikationsmodul (100), von Sicherheitsdaten an eine Notrufzentrale (500) über die drahtlose Kommunikationsverbindung mit dem Kommunikationsnetz (400) und Empfangen einer Rückmeldung der Notrufzentrale (500),
- internes Empfangen, in der Anwendungseinrichtung (200), einer Rückmeldung der Notrufzentrale (500),
- Empfangen, im Kommunikationsmodul (100), einer Aufforderung, das Ausgeben der automatischen Bestätigung eines Notrufs in einem Kommunikationsmodul (100) zu beenden,
- Beenden, über das Kommunikationsmodul (100), des Ausgebens der automatischen Bestätigung eines Notrufs mit höchster Priorität und Freigeben der Ausgabeeinheit in der Anwendungseinrichtung (200),
- Aktivieren, im Kommunikationsmodul (100), der Kommunikationsverbindung mit der Notrufzentrale (500) für eine Sprachkommunikation.

13. Verfahren nach einem der Ansprüche 7 bis 12, wobei bei einer Nichtübereinstimmung einer Sprachauswahl der spezifischen Sprache und/oder einer Kommunikationsverbindung der Schritt der drahtlosen Übertragung eines Notrufs parallel zum Zugriff auf eine eine automatische Bestätigung des Notrufs umfassende Datenentität (182) abgearbeitet wird.

## Revendications

1. Module de communication (100) conçu pour assurer la communication sans fil via un réseau de communication (400) et une connexion interne à un appareil (1000), au moyen d'un matériel d'application (200), le module de communication comprenant une mémoire de module dans laquelle sont stockées un certain nombre d'entités de données (182) comprenant la confirmation de l'appel d'urgence sous la forme d'une information de perception ;
dans lequel, en cas de détection d'un paramètre de situation d'urgence de l'appareil (1000), le module de communication (100) est capable de
- recevoir en interne, via la connexion interne (211), des données de sécurité spécifiant la situation d'urgence ;
- communiquer sans fil en externe un appel d'urgence au réseau de communication (400), comprenant un ensemble de données de sécurité, dès réception des données de sécurité spécifiant la situation d'urgence,
dans lequel le module de communication (100) est en outre capable :
- d'accéder à au moins une entité de données (181) stockée dans le module de communication (100) pour fournir un élément de données comprenant une confirmation automatisée de l'appel d'urgence, ladite confirmation automatisée étant destinée à être envoyée aux environs et l'élément de données comprenant la confirmation automatisée pouvant être transmis à l'appareil (1000) et stocké dans le module de communication (100), dans lequel une ou plusieurs des entités de données peuvent être combinées pour former un élément de données spécifique à une situation d'urgence comprenant une information de perception spécifique à cette situation, et la ou les entités de données peuvent être sélectionnées en fonction d'un ou de plusieurs des éléments suivants :
- les données de sécurité, y compris les besoins liés à la situation d'urgence,
- l'origine de l'appel d'urgence, transmis manuellement et/ou automatiquement par une machine,
- la qualité d'une liaison de communication.

2. Module de communication (100) selon la revendication 1, dans lequel le module de communication (100) est capable de fournir l'élément de données depuis l'entité de données (181) en récupérant cet élément de données depuis l'entité de données (181), dans lequel ledit élément de données et/ou la récupération est spécifique au paramètre de situation d'urgence et/ou à un groupe de paramètres de situation d'urgence.

3. Module de communication (100) selon l'une des revendications précédentes, comprenant :
- une interface de communication (150) pour l'établissement d'une liaison de communication sans fil avec le réseau de communication (400), où l'interface de communication (150) pour la communication sans fil est connectée à une antenne (160),
- une interface interne (211) servant à connecter le module de communication (100) à l'appareil (1000), au moyen du matériel d'application (200), où l'interface interne est conçue pour un échange interne de données entre l'appareil (1000) et le module de communication (100)
- un contrôleur de module (140) capable de contrôler l'échange interne de données entre le module de communication (100) et l'appareil (1000),
- une unité de rappel (130) capable d'accéder, dans la mémoire du module, à ladite entité de données (182) fournissant l'élément de données de l'information de perception.

4. Module de communication (100) selon l'une des revendications précédentes, dans lequel la confirmation automatisée de l'appel d'urgence correspond à une information visuelle, acoustique et/ou sensible et/ou à une autre information de perception pour la confirmation.

5. Module de communication (100) selon l'une des revendications précédentes, dans lequel l'information de perception correspond à une information sonore dans une langue spécifique et l'entité de données et/ou l'élément de données peut être sélectionné conformément à une sélection de langue selon la langue spécifique, dans lequel la sélection est prédéterminée et/ou définie par le contexte et/ou définie par des instructions.

6. Module de communication (100) selon la revendication 5, dans lequel une entité de données et/ou un élément de données comprenant une information sonore d'une langue spécifique est stocké dans la mémoire du module, dans un espace de stockage spécifique à la langue.

7. Procédé de communication sans fil via un module de communication (100) avec un réseau de communication (400), dans lequel le module de communication (100) est connecté à un appareil (1000) au moyen d'un matériel d'application (200), recevant un signal de situation d'urgence dans le matériel d'application (200) et recevant une demande de confirmation d'un appel d'urgence dans le module de communication (100), le module de communication comprenant une mémoire de module dans laquelle sont stockées un certain nombre d'entités de données (182) comprenant la confirmation de l'appel d'urgence sous la forme d'une information de perception ; dans lequel, en cas de détection d'une situation d'urgence, le module de communication (100)
- reçoit en interne des données de sécurité spécifiant la situation d'urgence ;
- communique sans fil un appel d'urgence au réseau de communication (400), comprenant un ensemble de données de sécurité, dès réception des données de sécurité spécifiant la situation d'urgence,
le module de communication (100) accédant en outre
- au moins à une entité de données (182) comprenant une confirmation automatisée de l'appel d'urgence pour une soumission interne et une soumission en interne de la confirmation automatisée au matériel d'application (200),
dans lequel une ou plusieurs des entités de données peuvent être combinées pour former un élément de données spécifique à une situation d'urgence comprenant une information de perception spécifique à cette situation,
et la ou les entités de données peuvent être sélectionnées en fonction d'un ou de plusieurs des éléments suivants :
- les données de sécurité, y compris les besoins liés à la situation d'urgence,
- l'origine de l'appel d'urgence, transmis manuellement et/ou automatiquement par une machine,
- la qualité d'une liaison de communication,
via le module de communication (100) envoyant la confirmation automatisée vers les environs au moyen d'une unité de sortie.

8. Procédé selon la revendication 7, dans lequel l'envoi de la confirmation automatisée vers l'environnement est réalisé durant un délai de sortie, ledit délai de sortie commençant à réception ou après réception des données de sécurité.

9. Procédé selon au moins l'une des revendications 7 ou 8, dans lequel
- la communication sans fil d'un appel d'urgence au réseau de communication (400) comprend : la construction d'une liaison de communication de type appel vocal, la transmission d'un ensemble de données de sécurité dans la liaison de type appel vocal, cet ensemble de données étant ensuite adapté pour une communication de type appel vocal via la liaison de communication de type appel vocal ; et dans lequel
- la confirmation automatisée de l'appel d'urgence est réalisée durant un délai de sortie, ledit délai de sortie commençant à un point temporel de début avant ou durant ou après le début de la construction d'une liaison de communication de type appel vocal et se terminant à un point temporel de fin durant le fin de la transmission de l'ensemble de données de sécurité et/ou avant ou durant le début de la communication de type appel vocal.

10. Procédé selon l'une des revendications 7 à 9, mis en oeuvre dans un système de matériel d'application (200) et de module de communication (100) selon l'une des revendications précédentes, comprenant les étapes suivantes :
- dans le matériel d'application (200), collecter des données de sécurité spécifiant la situation d'urgence
- dans le module de communication (100), recevoir en interne des données de sécurité spécifiant la situation d'urgence
- dans le module de communication (100), recevoir en interne une requête pour une communication sans fil en externe d'un appel d'urgence au réseau de communication (400) dès réception des données de sécurité spécifiant la situation d'urgence
- dans le module de communication (100), la construction d'une liaison de communication pour une communication sans fil en externe d'un appel d'urgence au réseau de communication (400) dès réception des données de sécurité spécifiant la situation d'urgence.

11. Procédé selon la revendication 10, dans lequel les étapes envoyant la confirmation automatisée et construisant une liaison de communication dans le module de communication (100) sont traitées au moins partiellement en parallèle.

12. Procédé selon l'une des revendications 7 à 11, comprenant les étapes suivantes :
- dans le module de communication (100), soumettre les données de sécurité à un centre d'appel d'urgence (500) via la liaison de communication sans fil avec le réseau de communication (400) et recevoir une rétroaction du centre d'appel d'urgence (500)
- dans le matériel d'application (200), recevoir en interne une rétroaction du centre d'appel d'urgence (500)
- dans le module de communication (100), recevoir une requête pour finaliser l'envoi de la confirmation automatisée d'un appel d'urgence dans un module de communication (100)
- via le module de communication (100), finaliser l'envoi de la confirmation automatisée d'un appel d'urgence avec une priorité absolue, et dans le matériel d'application (200), déverrouiller l'unité de sortie
- dans le module de communication (100), activer la liaison de communication avec le centre d'appel d'urgence (500) pour une communication vocale.

13. Procédé selon l'une des revendications 7 à 12, dans lequel, lorsque la langue sélectionnée ou la liaison de communication n'est pas adaptée, l'étape de communication sans fil d'un appel d'urgence est traitée en parallèle pour l'accès à une entité de données (182) comprenant une confirmation automatisée de l'appel d'urgence.
